# EUROPEAN PATENT SPECIFICATION

(11) **EP 3 388 254 B1**
(45) Date of publication and mention of the grant of the patent: **28.08.2019**
(21) Application number: 18152436.4
(22) Date of filing: 19.01.2018
(51) Int. Cl.: B60C 11/03, B60C 11/12

(54) **TIRE**
REIFEN
PNEUMATIQUE

(30) Priority: 11.04.2017 JP 2017078358
(43) Date of publication of application: 17.10.2018
(73) Proprietor: Sumitomo Rubber Industries, Ltd., Kobe-shi Hyogo-ken (JP)
(72) Inventor: TANAKA, Kouichirou, Kobe-shi Hyogo 651-0072 (JP)
(74) Representative: Manitz Finsterwald Patent- und Rechtsanwaltspartnerschaft mbB

(56) References cited:
- EP-A1- 3 015 288
- EP-A1- 3 015 290
- EP-A1- 3 081 398
- EP-A1- 3 378 678
- US-A1- 2016 332 489

## Description

### BACKGROUND OF THE INVENTION

### Field of the Invention

The present invention relates to a tire and specifically relates to a tire suitable for running on a snowy road surface.

### Description of the Background Art

For example, a tire intended for running on a snowy road surface has been proposed (see, for example, Japanese Laid-Open Patent Publication No. 2015-610). In a tread land portion of such a tire, lug grooves and axial grooves extending in the tire axial direction are formed. Such a tire enhances running performance on a snowy road surface (hereinafter, referred to merely as "snowy road performance") by packing snow within each groove and shearing the snow.

In order to further improve the snowy road performance, increasing the groove volumes of the axial grooves and the lug grooves is conceivable. However, such a method poses a problem that, for example, the pattern stiffness of the land portion decreases and thus the steering stability on a dry road surface deteriorates.

EP 3 015 288 A1 discloses a tire having the features according to the preamble of claim 1.

EP 3 015 290 A1 discloses a tire according to a related technology.

A tire according to a related technology is also disclosed in US 2016/0332489 A1.

Furthermore, EP 3 081 398 A1 also discloses a tire according to a related technology.

### SUMMARY OF THE INVENTION

The present invention has been made in view of the above-described actual circumstances, and a main object of the present invention is to provide a tire that can have improved snowy road performance while maintaining steering stability on a dry road surface. This object is achieved by a tire comprising the features of claim 1.

The present invention is directed to a tire having a tread portion in which a first crown land portion and a second crown land portion are located so as to be adjacent to each other across a crown main groove, wherein a first crown axial groove is provided in the first crown land portion so as to traverse an overall width of the first crown land portion, a second crown lug groove is provided in the second crown land portion so as to extend from the crown main groove and terminate within the second crown land portion, an opening of the first crown axial groove at the crown main groove is located so as to at least partially overlap an opening of the second crown lug groove at the crown main groove in a tire circumferential direction, and an intersection angle α formed by a longitudinal direction of the first crown axial groove and a longitudinal direction of the second crown lug groove is 120 to 150 degrees.

In the tire according to the present invention, a first crown sipe is provided in the first crown land portion, and an angle γ of a longitudinal direction of the first crown sipe relative to the tire circumferential direction is smaller than an angle β of the longitudinal direction of the first crown axial groove relative to the tire circumferential direction.

In the tire according to the present invention, the first crown axial groove has an inner portion located at the crown main groove side, and an outer portion located outward of the inner portion in a tire axial direction, and a groove depth of the outer portion is smaller than a groove depth of the inner portion.

In the tire according to the present invention, the first crown axial groove is preferably slanted in a direction opposite to that of the second crown lug groove.

In the tire according to the present invention, an angle difference (β-γ) between the angle β and the angle γ is preferably not greater than 10 degrees.

In the tire according to the present invention, a middle main groove is preferably provided at each side of the crown main groove so as to extend in a zigzagging manner.

In the tire according to the present invention, preferably, the middle main groove has an outer corner portion that projects outward in a tire axial direction, and an opening of the first crown axial groove at the middle main groove overlaps the outer corner portion in the tire circumferential direction.

In the tire according to the present invention, a distance, in the tire axial direction, between an amplitude center line of the middle main groove and a tire equator is preferably 15% to 25% of a tread width.

In the tire according to the present invention, a groove width, in a tire axial direction, of the middle main groove is preferably 5% to 7% of a tread width.

In the tire according to the present invention, a groove width, in a tire axial direction, of the middle main groove is preferably 120% to 140% of a groove width, in the tire axial direction, of the crown main groove.

In the tire according to the present invention, the crown main groove preferably extends straight.

In the tire according to the present invention, in the tread portion, the first crown land portion and the second crown land portion are located so as to be adjacent to each other across the crown main groove. The first crown axial groove is provided in the first crown land portion so as to traverse the overall width of the first crown land portion. Such a first crown axial groove exerts great snow column shearing force to shear a long snow column, thereby improving snowy road performance. The second crown lug groove is provided in the second crown land portion so as to extend from the crown main groove and terminate within the second crown land portion. Such a second crown lug groove inhibits a decrease in the stiffness of the crown land portion, and thus steering stability on a dry road surface can be maintained.

The opening of the first crown axial groove at the crown main groove is located so as to at least partially overlap the opening of the second crown lug groove at the crown main groove in the tire circumferential direction. Accordingly, a long snow column is formed so as to be substantially continuous over the first crown land portion and second crown land portion across the crown main groove, and greater snow column shearing force is obtained. At this time, snow discharge performance during turning improves while great shearing force is exerted, since the intersection angle α formed by the longitudinal direction of the first crown axial groove and the longitudinal direction of the second crown lug groove is 120 to 150 degrees.

Therefore, the tire according to the present invention can have improved snowy road performance while maintaining steering stability on a dry road surface.

### BRIEF DESCRIPTION OF THE DRAWINGS

FIG. 1 is a development of a tread portion according to an embodiment of the present invention;
FIG. 2 is an enlarged view of a crown land portion in FIG. 1;
FIG. 3 is a cross-sectional view taken along a line A-A in FIG. 1;
FIG. 4 is an enlarged view of the crown land portion in FIG. 1;
FIG. 5 is an enlarged view of a shoulder land portion in FIG. 1; and

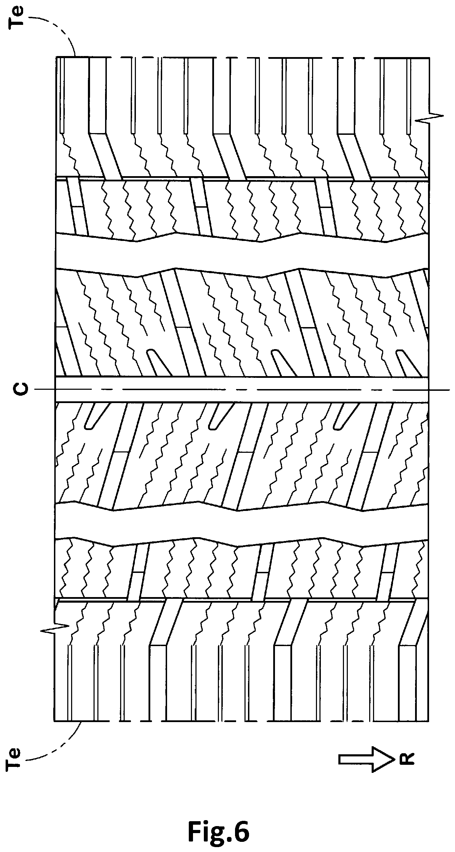

FIG. 6 is a development of a tread portion of a comparative example.

### DESCRIPTION OF THE PREFERRED EMBODIMENTS

Hereinafter, an embodiment of the present invention will be described with reference to the drawings.

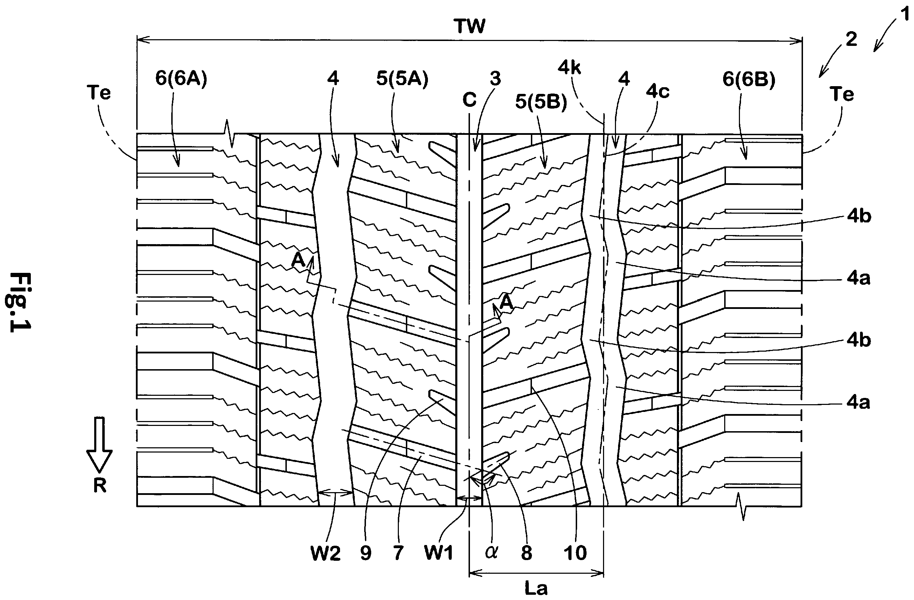

FIG. 1 is a development of a tread portion 2 of a tire 1 showing the embodiment of the present invention. In the present embodiment, as a preferable mode, a pneumatic tire for a passenger car is shown. However, it is needless to say that the present invention is applicable to tires 1 of other categories such as heavy duty tires.

As shown in FIG. 1, in the tread portion 2 of the present embodiment, one crown main groove 3 and a pair of middle main grooves 4 are provided. The crown main groove 3 is provided closest to a tire equator C and extends continuously in the tire circumferential direction. In the present embodiment, the crown main groove 3 is provided on the tire equator C. Each middle main groove 4 is provided between the crown main groove 3 and a tread edge Te and extends continuously in the tire circumferential direction.

The "tread edge" Te is defined as a ground contact position at the outermost side in the tire axial direction in a normal load applied state where a normal load is applied to the tire 1, in a normal state where the tire 1 is mounted to a normal rim and inflated to a normal internal pressure and no load is applied to the tire 1, such that the tire 1 is brought into contact with a plane at a camber angle of 0 degree. In the normal state, the distance in the tire axial direction between the tread edges Te is defined as a tread width TW. Unless otherwise specified, dimensions of components of the tire 1 and the like are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the "maximum value" indicated in the table "TIRE LOAD LIMITS AT VARIOUS COLD INFLATION PRESSURES" in the TRA standard, or the "LOAD CAPACITY" in the ETRTO standard.

In the present embodiment, the crown main groove 3 extends straight in the tire circumferential direction. Such a crown main groove 3 inhibits a decrease in the stiffness of land portions at both sides thereof and thus maintains high levels of uneven wear resistance and steering stability on a dry road surface. The crown main groove 3 is not limited to such a mode, and may extend, for example, in a zigzagging manner or in a wavy manner.

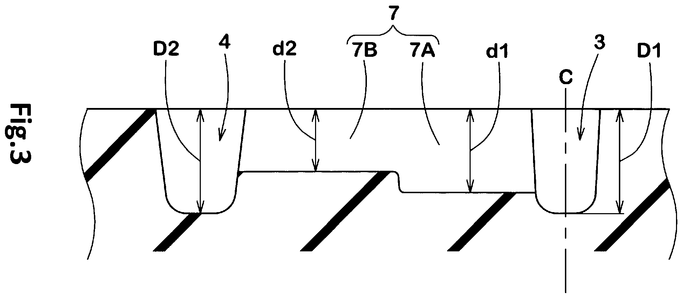

A groove width W1 of the crown main groove 3 is preferably, for example, 1.5% to 6.5% of the tread width TW. A groove depth D1 (shown in FIG. 3) of the crown main groove 3 is preferably, for example, 6 to 12 mm.

In the present embodiment, each middle main groove 4 extends in a zigzagging manner in the tire circumferential direction. Such a middle main groove 4 has components in the tire axial direction, and thus exerts snow column shearing force, thereby improving the snowy road performance. The middle main groove 4 is not limited to such a mode, and may extend, for example, straight or in a wavy manner.

In the present embodiment, each middle main groove 4 has outer corner portions 4a that project outward in the tire axial direction, and inner corner portions 4b that project inward in the tire axial direction. In the present specification, each outer corner portion 4a refers to a groove portion in which a groove center line 4c of the middle main groove 4 is located outward of an amplitude center line 4k of the middle main groove 4 in the tire axial direction. In addition, in the present specification, each inner corner portion 4b refers to a groove portion in which the groove center line 4c of the middle main groove 4 is located inward of the amplitude center line 4k of the middle main groove 4 in the tire axial direction. The groove center line 4c is a line segment connecting the mid-positions, in the tire axial direction, of the middle main groove 4. The amplitude center line 4k is a line segment that extends in the tire circumferential direction at the mid-position between both ends, in the tire axial direction, of the groove center line 4c. In each middle main groove 4 of the present embodiment, the outer corner portions 4a and the inner corner portions 4b are alternately provided in the tire circumferential direction.

As shown in FIG. 1, a distance La in the tire axial direction between the amplitude center line 4k of the middle main groove 4 and the tire equator C is preferably 15% to 25% of the tread width TW. Accordingly, the stiffness of a crown land portion 5 and the stiffness of a shoulder land portion 6 in the tire axial direction are ensured in a balanced manner, and thus the turning performance on a snowy road, the steering stability on a dry road surface, and the uneven wear resistance improve.

A groove width W2, in the tire axial direction, of each middle main groove 4 is preferably larger than the groove width W1, in the tire axial direction, of the crown main groove 3. Accordingly, high stiffness is maintained near the tire equator C on which a large contact pressure acts, and great snow column shearing force by the middle main groove 4 is ensured. In the case where the groove width W2 of the middle main groove 4 is excessively larger than the groove width W1 of the crown main groove 3, the stiffness of the crown land portion 5 or the shoulder land portion 6 may decrease. From such a viewpoint, the groove width W2, in the tire axial direction, of the middle main groove 4 is preferably 120% to 140% of the groove width W1 of the crown main groove 3. In order to effectively exert the above-described effect, the groove width W2, in the tire axial direction, of the middle main groove 4 is preferably 5% to 7% of the tread width TW.

A grove depth D2 (shown in FIG. 3) of each middle main groove 4 is not particularly limited, and is preferably, for example, 6 to 12 mm.

In the present embodiment, in the tread portion 2, the crown land portion 5 and the shoulder land portion 6 are provided. The crown land portion 5 is demarcated by the crown main groove 3 and the middle main grooves 4. In the present embodiment, the crown land portion 5 are formed of a first crown land portion 5A (at the left side in the drawings) and a second crown land portion 5B (at the right side in the drawings) that are adjacent to each other across the crown main groove 3. The shoulder land portion 6 is demarcated between the middle main grooves 4 and the tread edges Te. In the present embodiment, the shoulder land portion 6 is formed of a first shoulder land portion 6A adjacent to the first crown land portion 5A, and a second shoulder land portion 6B adjacent to the second crown land portion 5B.

The tire 1 according to the present embodiment has, for example, a predetermined rotation direction R. The rotation direction R is shown, for example, on each side wall portion (not shown) by a character or the like.

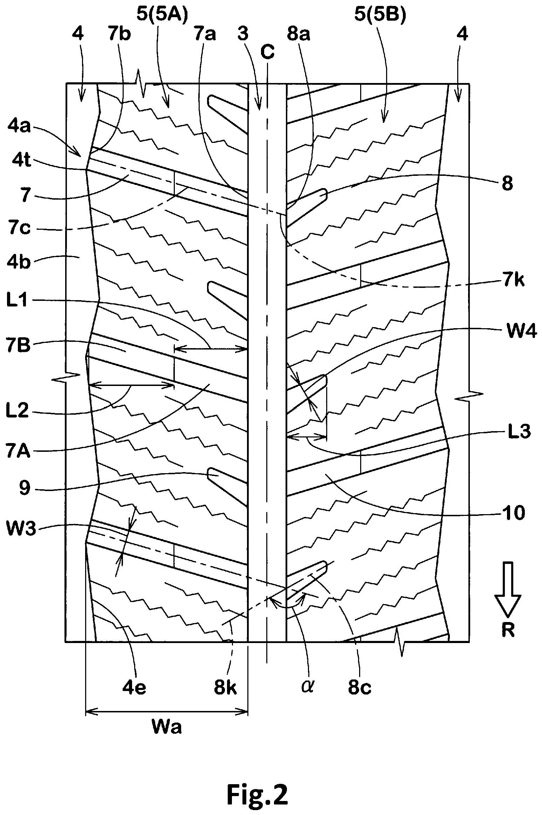

FIG. 2 is an enlarged view of the crown land portion 5 in FIG. 1. As shown in FIG. 2, first crown axial grooves 7 are provided in the first crown land portion 5A so as to traverse the overall width of the first crown land portion 5A. Such first crown axial grooves 7 exert great snow column shearing force to shear long snow columns, thereby improving the snowy road performance. In the present embodiment, the first crown axial grooves 7 are provided at intervals in the tire circumferential direction.

In the second crown land portion 5B, second crown lug grooves 8 are provided so as to extend from the crown main groove 3 and terminate within the second crown land portion 5B. The second crown lug grooves 8 inhibit a decrease in the stiffness of the second crown land portion 5B, and thus the steering stability on a dry road surface can be maintained. In the present embodiment, the second crown lug grooves 8 are provided at intervals in the tire circumferential direction.

An opening 7a of each first crown axial groove 7 at the crown main groove 3 is located so as to at least partially overlap an opening 8a of the second crown lug groove 8 at the crown main groove 3 in the tire circumferential direction. Accordingly, a long snow column is formed so as to be substantially continuous over the first crown land portion 5A and the second crown land portion 5B across the crown main groove 3, and greater snow column shearing force is obtained. In the present specification, the "partially overlap" refers to a mode in which an extension obtained by smoothly extending the groove center line of either one of the first crown axial groove 7 and the second crown lug groove 8 communicates with the opening of the other groove. In the present embodiment, an extension 7k of a groove center line 7c of the first crown axial groove 7 communicates with the opening 8a of the second crown lug groove 8. In addition, an extension 8k of a groove center line 8c of the second crown lug groove 8 does not reach the opening 7a of the first crown axial groove 7.

An intersection angle α formed by the longitudinal direction of the first crown axial groove 7 and the longitudinal direction of the second crown lug groove 8 is set at 120 to 150 degrees. When the intersection angle α is less than 120 degrees, the stiffness of the first crown land portion 5A at the acute angle side between the first crown axial groove 7 and the crown main groove 3 or the stiffness of the second crown land portion 5B at the acute angle side between the second crown lug groove 8 and the crown main groove 3 decreases. Accordingly, the steering stability on a dry road surface deteriorates. When the intersection angle α exceeds 150 degrees, snow discharge performance during turning deteriorates. From such a viewpoint, the intersection angle α is preferably not less than 125 degrees and preferably not greater than 145 degrees. In the present specification, the intersection angle α is defined by the groove center line of each groove.

In the present embodiment, each first crown axial groove 7 extends from the tire equator C side toward the tread edge Te side in the direction opposite to the rotation direction R. Accordingly, snow within the first crown axial groove 7 is smoothly discharged to the middle main groove 4 side by contact pressure during straight running and lateral force during turning running.

Each second crown lug groove 8 is slanted relative to the tire axial direction in the direction opposite to the first crown axial groove 7 and extends from the tire equator C side toward the tread edge Te side in the direction opposite to the rotation direction R. Accordingly, in the present embodiment, the first crown axial groove 7 and the second crown lug groove 8 form a V-shaped groove, and lateral forces that occur in the first crown axial groove 7 and the second crown lug groove 8 in directions opposite to each other are cancelled out. Thus, snowy road performance, particularly, straight running stability on a snowy road, improves.

FIG. 3 is a cross-sectional view taken along a line A-A in FIG. 1. As shown in FIG. 3, in the present embodiment, each first crown axial groove 7 has an inner portion 7A located at the crown main groove 3 side, and an outer portion 7B located outward of the inner portion 7A in the tire axial direction. In the present embodiment, the inner portion 7A communicates with the crown main groove 3. In the present embodiment, the outer portion 7B communicates with the middle main groove 4.

In the present embodiment, the outer portion 7B is formed such that a groove depth d2 thereof is smaller than a groove depth d1 of the inner portion 7A. Such a first crown axial groove 7 forms a large snow column at the tire equator C side on which a large contact pressure acts, and thus the snowy road performance improves. In addition, a decrease in the stiffness of the outer side, in the tire axial direction of the first crown land portion 5A on which great lateral force acts during turning, is inhibited, and thus a high level of the steering stability on a dry road surface is maintained.

In order to improve the snowy road performance while maintaining the steering stability on a dry road surface, the groove depth d2 of the outer portion 7B is preferably, for example, 65% to 85% of the groove depth d1 of the inner portion 7A. In addition, the groove depth d1 of the inner portion 7A is preferably 40% to 65% of the groove depth D1 of the crown main groove 3.

As shown in FIG. 2, in order to effectively exert the above-described effect, a length L2, in the tire axial direction, of the outer portion 7B is preferably 85% to 105% of a length L1, in the tire axial direction, of the inner portion 7A. In the present specification, the length, in the tire axial direction, of each axial groove is specified as the length of the groove center line thereof.

In the present embodiment, an opening 7b of each first crown axial groove 7 at the middle main groove 4 overlaps the outer corner portion 4a in the tire circumferential direction. Accordingly, a large snow column is formed in the first crown axial groove 7, and thus greater snow column shearing force can be obtained. In the present specification, the "overlap the outer corner portion" refers to a mode in which the opening 7b of the first crown axial groove 7 does not extend to the inner corner portion 4b in the tire circumferential direction. The opening 7b of the present embodiment is provided at a projection portion 4t at which an inner groove edge 4e, in the tire axial direction, of the middle main groove 4 projects most outward in the tire axial direction.

In the present embodiment, each first crown axial groove 7 is formed in a straight shape. Such a first crown axial groove 7 inhibits a decrease in the stiffness of the crown land portion 5 and maintains high levels of the steering stability on a dry road surface and the uneven wear resistance.

A groove width W3 of each first crown axial groove 7 is not particularly limited, and is preferably, for example, 50% to 70% of the groove width W1 of the crown main groove 3 from the viewpoint of enhancing the snowy road performance while maintaining the steering stability on a dry road surface.

In the present embodiment, each second crown lug groove 8 has a groove width W4 that gradually decreases toward the outer side in the tire axial direction. Such a second crown lug groove 8 smoothly discharges snow therein to the crown main groove 3 and thus improves the snowy road performance.

The groove width W4 (the average in the longitudinal direction) of the second crown lug groove 8 is preferably, for example, 25% to 45% of the groove width W1 of the crown main groove 3. In addition, a length L3, in the tire axial direction, of the second crown lug groove 8 is preferably 15% to 35% of a maximum width Wa, in the tire axial direction, of the crown land portion 5.

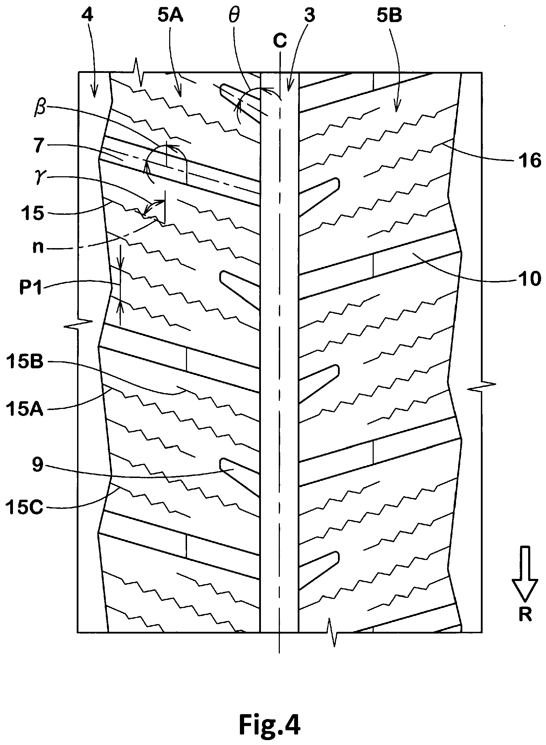

FIG. 4 is an enlarged view of the crown land portion 5 in FIG. 1. As shown in FIG. 4, a first crown sipe 15 is provided in the first crown land portion 5A. In the present embodiment, a plurality of first crown sipes 15 are provided. In the present specification, each sipe is defined as a slit having a width less than 2 mm. Meanwhile, each groove is defined as a groove-like recess having a width of not less than 2 mm. Each first crown sipe 15 reduces the stiffness of the first crown land portion 5A to promote deformation of the first crown axial groove 7 or the second crown lug groove 8. Thus, the respective grooves 7 and 8 can greatly hold snow therein, and thus the snowy road performance improves.

Each first crown sipe 15 extends in a zigzagging manner in the tire axial direction. With such a first crown sipe 15, even when lateral force during turning acts thereon, the edges thereof are engaged with each other, and thus apparent stiffness of the first crown land portion 5A in the tire axial direction is maintained high, so that a decrease in the turning performance is inhibited.

A plurality of the first crown sipes 15 are provided between the first crown axial grooves 7 adjacent to each other in the tire circumferential direction. Accordingly, the above-described effect is effectively exerted.

In the present embodiment, each first crown sipe 15 is slanted relative to the tire circumferential direction in the same direction as that of the first crown axial groove 7. Accordingly, the effect of deforming the first crown axial groove 7 increases, and great snow column shearing force is further exerted.

An angle γ of the longitudinal direction of each first crown sipe 15 relative to the tire circumferential direction is preferably smaller than an angle β of the longitudinal direction of each first crown axial groove 7 relative to the tire circumferential direction. When the angle γ of each first crown sipe 15 is larger than the angle β of each first crown axial groove 7, the snow discharge performance of the first crown axial groove 7 during turning may decrease. In addition, the edges, in the tire circumferential direction, of each first crown sipe 15 become small, and thus, for example, the turning performance on a packed-snowy road surface obtained by snow being packed may decrease. When the angle γ of each first crown sipe 15 is excessively smaller than the angle β of each first crown axial groove 7, a step of stiffness in the tire circumferential direction between the first crown sipe 15 and the first crown axial groove 7 increases along the tire axial direction, and thus the uneven wear resistance may deteriorate. In the present specification, the angle of each sipe extending in a zigzagging manner is defined as the angle of a zigzag amplitude center line n thereof.

In order to more effectively exert the above-described effect, the angle difference (β-γ) is preferably not greater than 10 degrees. In addition, the angle γ of each first crown sipe 15 is preferably, for example, 55 to 75 degrees.

The first crown sipes 15 include first sipes 15A, second sipes 15B, and third sipes 15C. The first sipes 15A are full-open-type sipes that traverse the overall width of the first crown land portion 5A. The second sipes 15B are semi-open-type sipes that extend from the crown main groove 3 toward the outer side in the tire axial direction and that terminate within the first crown land portion 5A. The third sipes 15C are semi-open-type sipes that extend from the middle main groove 4 toward the tire equator C side and that terminate within the first crown land portion 5A. Such first sipes 15A to third sipes 15C can, for example, inhibit a decrease in the pattern stiffness of the first crown land portion 5A and thus maintain a high level of the steering stability on a dry road surface.

In the present embodiment, the first sipes 15A to third sipes 15C are each slanted to one side relative to the tire axial direction in a plan view of the tread portion 2 (extends downward to the right). Accordingly, a small step of the stiffness of the first crown land portion 5A in the tire circumferential direction is maintained, and a high level of uneven wear resistance is achieved. In addition, in order to effectively exert such an effect, pitches P1 in the tire circumferential direction of the first crown sipes 15 adjacent to each other in the tire circumferential direction are preferably equal pitches. In the present embodiment, the first sipes 15A to third sipes 15C are slanted parallel to each other.

In the present embodiment, first crown lug grooves 9 are further provided in the first crown land portion 5A. In addition, second crown axial grooves 10 and second crown sipes 16 are further provided in the second crown land portion 5B. In the present embodiment, the tread portion 2 is formed so as to be in left-right line symmetry with respect to the tire equator C when being shifted at both sides of the tire equator C by an arbitrary distance in the tire circumferential direction. As described above, each first crown lug groove 9 of the present embodiment is formed in the same shape as that of each second crown lug groove 8. Each second crown axial groove 10 of the present embodiment is formed in the same shape as that of each first crown axial groove 7. In any of left turning and right turning, snow within the first crown axial groove 7 or the second crown axial groove 10 is smoothly discharged to the middle main groove 4, and thus the snow discharge performance during turning improves. Each second crown sipe 16 of the present embodiment is formed in the same shape as that of each first crown sipe 15. In the present specification, the detailed description of the first crown lug grooves 9, the second crown axial grooves 10, and the second crown sipes 16 is omitted.

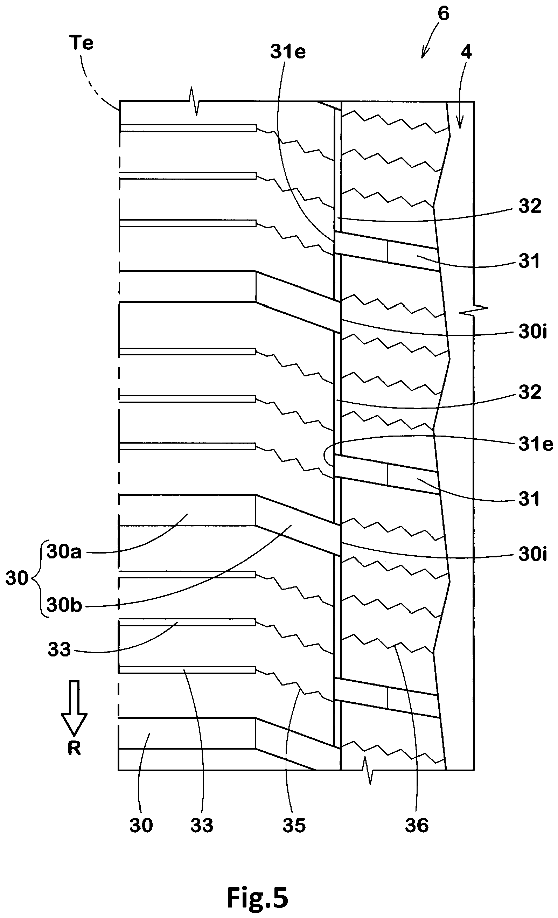

FIG. 5 is a plan view of the shoulder land portion 6 at the left side in FIG. 1. As shown in FIG. 5, a plurality of outer shoulder lug grooves 30, a plurality of inner shoulder lug grooves 31, a plurality of circumferential narrow grooves 32, and a plurality of axial narrow grooves 33 are provided in the shoulder land portion 6.

In the present embodiment, each outer shoulder lug groove 30 extends from the tread edge Te toward the inner side in the tire axial direction and has an inner end 30i at which the outer shoulder lug groove 30 terminates within the shoulder land portion 6. For example, each outer shoulder lug groove 30 extends with a uniform groove width in the tire circumferential direction. In the present embodiment, each outer shoulder lug groove 30 includes an axial portion 30a extending along the tire axial direction, and a slanted portion 30b that communicates with the axial portion 30a and that is slanted at a greater angle relative to the tire axial direction than the axial portion 30a.

Each inner shoulder lug groove 31 extends from the middle main groove 4 toward the outer side in the tire axial direction and has an outer end 31e at which the inner shoulder lug groove 31 terminates within the shoulder land portion 6. Each inner shoulder lug groove 31 extends straight and is slanted relative to the tire axial direction.

Each circumferential narrow groove 32 extends, for example, along the tire circumferential direction. The circumferential narrow grooves 32 of the present embodiment connect the inner ends 30i of the outer shoulder lug grooves 30 to the outer ends 31e of the inner shoulder lug grooves 31 and are provided at intervals in the tire circumferential direction.

A plurality of the axial narrow grooves 33 of the present embodiment are provided between the outer shoulder lug grooves 30 adjacent to each other in the tire circumferential direction. In the present embodiment, each axial narrow groove 33 extends along the tire axial direction from the tread edge Te toward the inner side in the tire axial direction and terminates without communicating with the circumferential narrow groove 32.

In the shoulder land portion 6, outer shoulder sipes 35 and inner shoulder sipes 36 are further provided. Each outer shoulder sipe 35 connects the circumferential narrow groove 32 to the axial narrow groove 33. Each inner shoulder sipe 36 connects the middle main groove 4 to the circumferential narrow groove 32.

Each outer shoulder sipe 35 of the present embodiment extends in the same direction relative to the tire axial direction as the slanted portion 30b. In the present embodiment, each outer shoulder sipe 35 extends parallel to the slanted portion 30b.

In the present embodiment, each inner shoulder sipe 36 extends parallel to the inner shoulder lug groove 31.

Although the embodiment of the present invention has been described in detail above, the present invention is not limited to the illustrated embodiment, and it is needless to say that various modifications can be made to implement the present invention.

### EXAMPLES

Pneumatic tires with a size of 205/65R16 having the basic pattern in FIG. 1 were produced as samples on the basis of specifications in Table 1, and each sample tire was tested for snowy road performance, steering stability on a dry road surface, and uneven wear resistance. The common specifications and the test methods for each sample tire are as follows.

Depth of each main groove: 10 mm
Tread width TW: 176 mm
Angle of second crown lug groove relative to tire circumferential direction: 65 (degrees)

### <Snowy road Performance and Steering Stability on Dry Road Surface>

Each sample tire was mounted to all the wheels of a four-wheel-drive vehicle having a displacement of 2000 cc under the following conditions. A test driver drove the vehicle on test courses with a snowy road surface and a dry asphalt road surface, and made sensory evaluation for running characteristics regarding traction, running stability, and turning performance at that time. The results are indicated as scores with the result of Example 1 being 100. A higher value indicates a better result.
Rim: 6.5J
Internal pressure: 390 kPa (front wheel), 350 kPa (rear wheel)

### <Uneven Wear Resistance>

Each sample tire was caused to run 10,000 km on a test course with a dry asphalt road surface. Thereafter, a difference in wear amount by heel-to-toe wear was measured at the crown land portion adjacent to the crown axial grooves. The results are indicated as indexes using the inverses of the measured values, with the value of Example 1 being 100. A higher value indicates a better result.

The results of the test, etc. are shown in Table 1.

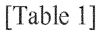

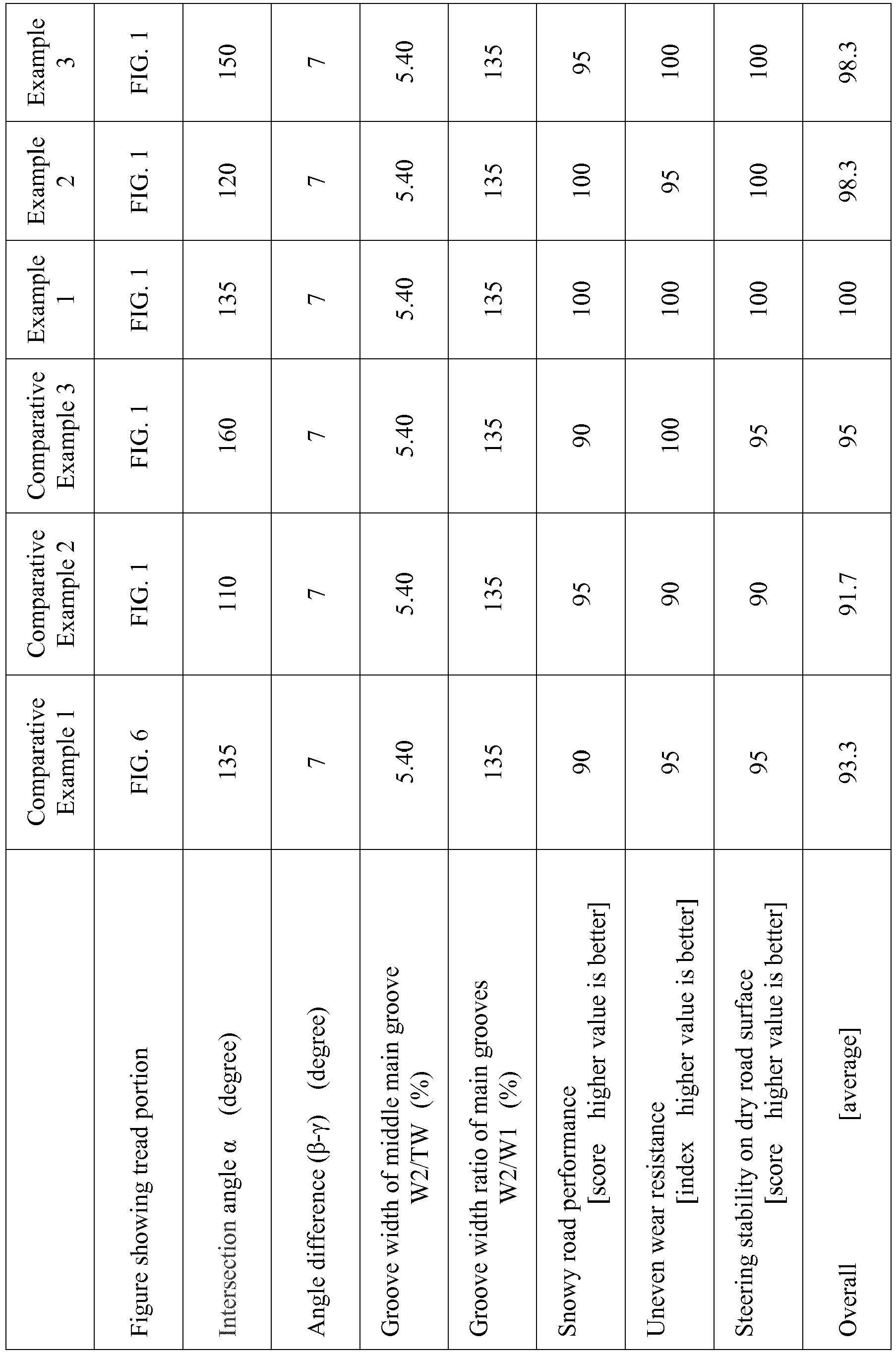

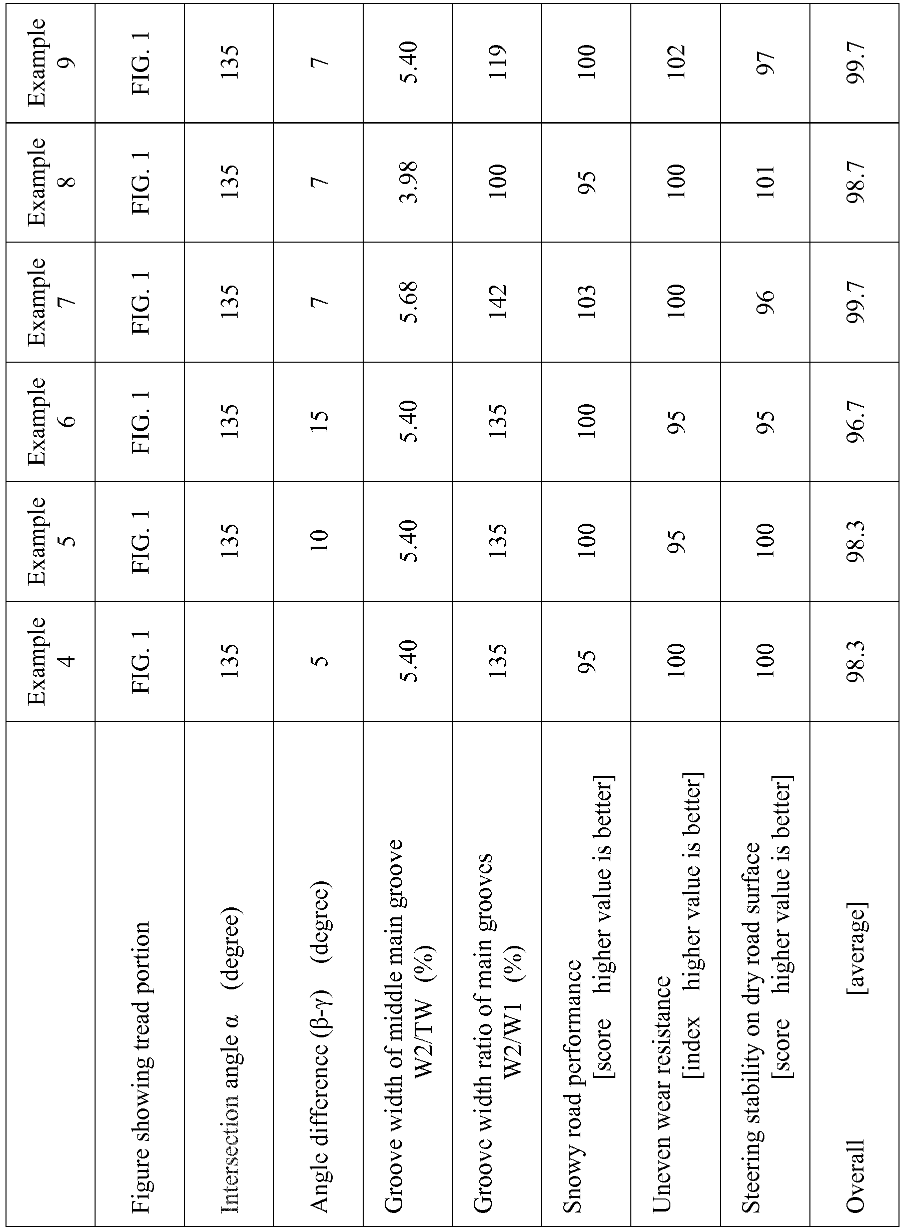

As a result of the tests, it was confirmed that the tires of the examples have improved snowy road performance, while the steering stability on a dry road surface is maintained, as compared to the tires of the comparative examples. In addition, the uneven wear resistance is also maintained high.

## Claims

1. A tire (1) having a tread portion (2) in which a first crown land portion (5A) and a second crown land portion (5B) are located so as to be adjacent to each other across a crown main groove (3), wherein
a first crown axial groove (7) is provided in the first crown land portion (5A) so as to traverse an overall width of the first crown land portion (5A),
a second crown lug groove (8) is provided in the second crown land portion (5B) so as to extend from the crown main groove (3) and terminate within the second crown land portion (5B),
an opening (7a) of the first crown axial groove (7) at the crown main groove (3) is located so as to at least partially overlap an opening (8a) of the second crown lug groove (8) at the crown main groove (3) in a tire circumferential direction,
an intersection angle α formed by a longitudinal direction of the first crown axial groove (7) and a longitudinal direction of the second crown lug groove (8) is 120 to 150 degrees, and
a first crown sipe (15) is provided in the first crown land portion (5A),
**characterized in that**
an angle γ of a longitudinal direction of the first crown sipe (15) relative to the tire circumferential direction is smaller than an angle β of the longitudinal direction of the first crown axial groove (7) relative to the tire circumferential direction,
the first crown axial groove (7) has an inner portion (7A) located at the crown main groove (3) side and an outer portion (7B) located outward of the inner portion (7A) in a tire axial direction, and
a groove depth (d2) of the outer portion (7B) is smaller than a groove depth (d1) of the inner portion (7A).

2. The tire (1) according to claim 1, wherein the first crown axial groove (7) is slanted in a direction opposite to that of the second crown lug groove (8).

3. The tire (1) according to claim 1 or 2, wherein an angle difference (β-γ) between the angle β and the angle γ is not greater than 10 degrees.

4. The tire (1) according to any one of claims 1 to 3, wherein a middle main groove (4) is provided at each side of the crown main groove (3) so as to extend in a zigzagging manner.

5. The tire (1) according to claim 4, wherein
the middle main groove (4) has an outer corner portion (4a) that projects outward in a tire axial direction, and
an opening (7b) of the first crown axial groove (7) at the middle main groove (4) overlaps the outer corner portion (4a) in the tire circumferential direction.

6. The tire (1) according to claim 4 or 5, wherein a distance (La), in the tire axial direction, between an amplitude center line (4k) of the middle main groove (4) and a tire equator (C) is 15% to 25% of a tread width (TW).

7. The tire (1) according to any one of claims 4 to 6, wherein a groove width (W2), in a tire axial direction, of the middle main groove (4) is 5% to 7% of a tread width (TW).

8. The tire (1) according to any one of claims 4 to 7, wherein a groove width (W2), in a tire axial direction, of the middle main groove (4) is 120% to 140% of a groove width (W1), in the tire axial direction, of the crown main groove (3).

9. The tire (1) according to any one of claims 1 to 8, wherein the crown main groove (3) extends straight.

## Patentansprüche

1. Reifen (1) mit einem Laufflächenabschnitt (2), in dem ein erster Kronenlandabschnitt (5A) und ein zweiter Kronenlandabschnitt (5B) derart angeordnet sind, dass diese über eine Kronenhauptrille (3) zueinander benachbart sind, wobei
eine erste Kronenaxialrille (7) derart in dem ersten Kronenlandabschnitt (5A) vorgesehen ist, dass diese eine Gesamtbreite des ersten Kronenlandabschnitts (5A) überquert,
eine zweite Kronenstollenrille (8) derart in dem zweiten Kronenlandabschnitt (5B) vorgesehen ist, dass sich diese von der Kronenhauptrille (3) erstreckt und innerhalb des zweiten Kronenlandabschnitts (5B) endet,
eine Öffnung (7a) der ersten Kronenaxialrille (7) derart an der Kronenhauptrille (3) angeordnet ist, dass diese eine Öffnung (8a) der zweiten Kronenstollenrille (8) an der Kronenhauptrille (3) in einer Umfangsrichtung des Reifens zumindest teilweise überlagert,
ein Schnittwinkel a, der durch eine Längsrichtung der ersten Kronenaxialrille (7) und eine Längsrichtung der zweiten Kronenstollenrille (8) gebildet ist, 120 bis 150 Grad beträgt und
ein erster Kronenfeinschnitt (15) in dem ersten Kronenlandabschnitt (5A) vorgesehen ist,
**dadurch gekennzeichnet, dass**
ein Winkel γ einer Längsrichtung des ersten Kronenfeinschnitts (15) relativ zu der Umfangsrichtung des Reifens kleiner als ein Winkel β der Längsrichtung der ersten Kronenaxialrille (7) relativ zu der Umfangsrichtung des Reifens ist,
die erste Kronenaxialrille (7) einen inneren Abschnitt (7A), der auf der Seite der Kronenhauptrille (3) angeordnet ist, und einen äußeren Abschnitt (7B) aufweist, der in einer axialen Richtung des Reifens außerhalb des inneren Abschnitts (7A) angeordnet ist, und
eine Rillentiefe (d2) des äußeren Abschnitts (7B) kleiner als eine Rillentiefe (d1) des inneren Abschnitts (7A) ist.

2. Reifen (1) nach Anspruch 1, wobei die erste Kronenaxialrille (7) in einer Richtung entgegengesetzt zu derjenigen der zweiten Kronenstollenrille (8) geneigt ist.

3. Reifen (1) nach Anspruch 1 oder 2, wobei eine Winkeldifferenz (β-γ) zwischen dem Winkel β und dem Winkel γ nicht größer als 10 Grad ist.

4. Reifen (1) nach einem der Ansprüche 1 bis 3, wobei eine Mittelhauptrille (4) derart auf jeder Seite der Kronenhauptrille (3) vorgesehen ist, dass sich diese auf eine Zickzack-Weise erstreckt.

5. Reifen (1) nach Anspruch 4, wobei
die Mittelhauptrille (4) einen äußeren Eckenabschnitt (4a) aufweist, der in einer axialen Richtung des Reifens nach außen hervorsteht, und
eine Öffnung (7b) der ersten Kronenaxialrille (7) an der Mittelhauptrille (4) den äußeren Eckenabschnitt (4a) in der Umfangsrichtung des Reifens überlagert.

6. Reifen (1) nach Anspruch 4 oder 5, wobei eine Distanz (La) in der axialen Richtung des Reifens zwischen einer Amplitudenmittelachse (4k) der Mittelhauptrille (4) und einem Reifenäquator (C) 15% bis 25% einer Laufflächenbreite (TW) beträgt.

7. Reifen (1) nach einem der Ansprüche 4 bis 6, wobei eine Rillenbreite (W2) der Mittelhauptrille (4) in einer axialen Richtung des Reifens 5% bis 7% einer Laufflächenbreite (TW) beträgt.

8. Reifen (1) nach einem der Ansprüche 4 bis 7, wobei eine Rillenbreite (W2) der Mittelhauptrille (4) in einer axialen Richtung des Reifens 120% bis 140% einer Rillenbreite (W1) der Kronenhauptrille (3) in der axialen Richtung des Reifens beträgt.

9. Reifen (1) nach einem der Ansprüche 1 bis 8, wobei sich die Kronenhauptrille (3) gerade erstreckt.

## Revendications

1. Pneumatique (1) ayant une portion formant bande de roulement (2) dans laquelle une première portion en relief de couronne (5A) et une seconde portion en relief de couronne (5B) sont situées de manière à être adjacentes l'une à l'autre à travers une rainure principale de couronne (3), dans lequel
une première rainure axiale de couronne (7) est prévue dans la première portion en relief de couronne (5A) de manière à traverser une largeur totale de la première portion en relief de couronne (5A),
une seconde rainure annexe de couronne (8) est prévue dans la seconde portion en relief de couronne (5B) de manière à s'étendre depuis la rainure principale de couronne (3) et se terminer à l'intérieur de la seconde portion en relief de couronne (5B),
une ouverture (7a) de la première rainure axiale de couronne (7) au niveau de la rainure principale de couronne (3) est située de manière à chevaucher au moins partiellement une ouverture (8a) de la seconde rainure annexe de couronne (8) au niveau de la rainure principale de couronne (8) dans une direction circonférentielle du pneumatique,
un angle d'intersection α formé par une direction longitudinale de la première rainure axiale de couronne (7) et une direction longitudinale de la seconde rainure annexe de couronne (8) est de 120 à 150°, et
une première fente de couronne (15) est prévue dans la première portion en relief de couronne (5A),
**caractérisé en ce que**
un angle γ d'une direction longitudinale de la première fente de couronne (15) par rapport à la direction circonférentielle du pneumatique est plus petit qu'un angle β de la direction longitudinale de la première rainure axiale de couronne (7) par rapport à la direction circonférentielle du pneumatique,
la première rainure axiale de couronne (7) a une portion intérieure (7A) située du côté de la rainure principale de couronne (3) et une portion extérieure (7B) située à l'extérieur de la portion intérieure (7A) dans une direction axiale du pneumatique, et
une profondeur de rainure (d2) de la portion extérieure (7B) est plus petite qu'une profondeur de rainure (d1) de la portion intérieure (7A).

2. Pneumatique (1) selon la revendication 1, dans lequel la première rainure axiale de couronne (7) est en oblique dans une direction opposée à celle de la seconde rainure annexe de couronne (8).

3. Pneumatique (1) selon la revendication 1, dans lequel une différence angulaire (β-γ) entre l'angle β et l'angle γ n'est pas supérieure à 10°.

4. Pneumatique (1) selon l'une quelconque des revendications 1 à 3, dans lequel une rainure principale médiane (4) est prévue de chaque côté de la rainure principale de couronne (3) de manière à s'étendre en zigzag.

5. Pneumatique (1) selon la revendication 4, dans lequel la rainure principale médiane (4) possède une portion de coin extérieur (4a) qui se projette vers l'extérieur dans une direction axiale du pneumatique, et une ouverture (7b) de la première rainure axiale de couronne (7) au niveau de la rainure principale médiane (4) chevauche la portion de coin extérieur (4a) dans la direction circonférentielle du pneumatique.

6. Pneumatique (1) selon la revendication 4 ou 5, dans lequel une distance (La), dans la direction axiale du pneumatique, entre une ligne centrale d'amplitude (4k) de la rainure principale médiane (4) et un équateur de pneumatique (C) est de 15 % à 25 % d'une largeur de roulement (TW).

7. Pneumatique (1) selon l'une quelconque des revendications 4 à 6, dans lequel une largeur de rainure (W2), dans une direction axiale du pneumatique, de la rainure principale médiane (4) est de 5 % à 7 % d'une largeur de roulement (TW).

8. Pneumatique (1) selon l'une quelconque des revendications 4 à 7, dans lequel une largeur de rainure (W2), dans une direction axiale du pneumatique, de la rainure principale médiane (4) est de 120 % à 140 % d'une largeur de rainure (W1), dans la direction axiale du pneumatique, de la rainure principale de couronne (3).

9. Pneumatique (1) selon l'une quelconque des revendications 1 à 8, dans lequel la rainure principale de couronne (3) s'étend en ligne droite.
